Europäisches Patentamt

European Patent Office

Office européen des brevets

(11) Publication number: **0 452 499 A1**

(12) **EUROPEAN PATENT APPLICATION**
**published in accordance with Art.**
**158(3) EPC**

(21) Application number: 90914952.8

(22) Date of filing: 15.10.90

(86) International application number:
**PCT/JP90/01328**

(87) International publication number:
**WO 91/07706 (30.05.91 91/12)**

(51) Int. Cl.⁵: **G05B 19/403**

(30) Priority: **08.11.89 JP 288761/89**

(43) Date of publication of application:
**23.10.91 Bulletin 91/43**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **SEKI, Masaki**
**5-17-23, Kugayama Suginami-ku**
**Tokyo 168(JP)**
Inventor: **TAKEGAHARA, Takashi**
**256-2, Nishiteragata-machi**
**Hachioji-shi Tokyo 192-01(JP)**
Inventor: **NAKAJIMA, Masatoshi Fanuc Dai-3**
**Vira-karamatsu 3527-1, Shibokusa**
**Oshino-mura**
**Minamitsuru-gun Yamanashi 401-05(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

㊵ **SET DATA RETAINING METHOD.**

㊐ By the method, set data which are necessary for generation and confirmation of NC data on the basis of programming data can be set in such a manner that they can be utilized again. When a part program or data inputted in an interactive mode are designated, a processor (1) in a programming apparatus searches a set data file in a RAM (3) (S1). When the set data relating to the programming data are not contained in the set data file, a screen for setting the set data is displayed on a CRT (7) and the set data is stored in the set data file in association with the programming data in accordance with the input of the set data by an operator (S5). Thereafter when the same programming data is designated and hence the set data associated with this programming data is contained in the set data file, the set data and a message inquiring whether or not the set data can be used are displayed on the screen (S3). The set data is used for preparation and confirmation of the NC data (S7) and retained in the set data file (S8).

FIG.2

```
        ( S T A R T )
             │
             ▼
   ┌─────────────────────┐ ─S1
   │ SEARCH FOR SET DATA FILE │
   └─────────────────────┘
             │
             ▼
  NO       ◇────────────◇ ─S2
 ◄─────────  SET DATA PRESENT ?
             ◇────────────◇
             │ YES
             ▼
   ┌─────────────────────┐ ─S3
   │ DISPLAY SET DATA &   │
   │ QUESTION MESSAGE     │
   └─────────────────────┘
             │
             ▼                        ─S6
        ◇────────────◇   YES    ┌──────────────┐
        SET DATA USABLE ? ──────►│ READ SET DATA │
        ◇────────────◇          └──────────────┘
             │ NO  ─S5
             ▼
   ┌─────────────────────┐
   │ DISPLAY DATA SETTING PICTURE │
   │ & EXECUTE DATA SETTING │
   └─────────────────────┘
             │
             ▼
   ┌─────────────────────┐ ─S7
   │ EXECUTE SELECTED PART │
   │ PROGRAM BY SET DATA TO│
   │ ORIGINATE NC DATA AND │
   │ DISPLAY CUTTER PATH   │
   └─────────────────────┘
             │
             ▼
   ┌─────────────────────┐ ─S8
   │ SAVE SET DATA IN SET DATA │
   │ FILE                 │
   └─────────────────────┘
             │
             ▼
         ( E N D )
```

## Technical Field

The present invention relates to a set data retention method capable of reusably setting set data required for the origination or identification of NC data based on programming data.

## Background Art

It is generally known that the origination or identification of NC data based on programming data is executed by means of an NC automatic programming apparatus. In originating or identifying the NC data, a part program for use as the programming data or data interactively originated by means of the automatic programming apparatus is executed with reference to set data. The set data, which should be set for each programming data used for the origination or identification of the NC data, include the cutter path drawing range on a CRT screen, drawing scale, type (EIA, ISO, etc.) of the code used for the delivery of NC data to an NC tape, etc.

After the end of the origination or identification of one NC data, according to a conventional set data retention method, if set data associated with another NC data is entered in the programming apparatus, in order to originate or identify the second NC data, set data used for the origination or identification of the previous NC data will disappear. Thus, set data must inevitably be set every time the NC data is originated or identified. Also in re-originating or re-identifying the same NC data, therefore, the set data should be reset, requiring troublesome work. Further, the efficiency of the NC data origination or identification is lowered.

## Disclosure of the Invention

The object of the present invention is to provide a set data retention method capable of reusably setting set data required for the origination or identification of NC data based on programming data.

In order to achieve the above object, a set data retention method according to the present invention comprises the steps of: (a) storing set data in association with programming data for the origination or identification of NC data when the set data is inputted, the set data being required for the execution of the programming data; and (b) reading out the set data associated with the programming when the programming data is rerun.

According to the present invention, as described above, the set data required for the execution of the programming data for the origination or identification of the NC data is stored in association with programming data, and the set data associated with the programming is read out when the programming data is rerun, so that the set data need not be set every time the same NC data is originated or identified, that is, the NC data can be efficiently originated or identified.

## Brief Description of the Drawings

Fig. 1 is a block diagram showing the principal part of an automatic programming apparatus for embodying a set data retention method according to one embodiment of the present invention; and

Fig. 2 is a flow chart showing a set data setting/retention process executed by means of the programming apparatus of Fig. 1.

## Best Mode of Carrying Out the Invention

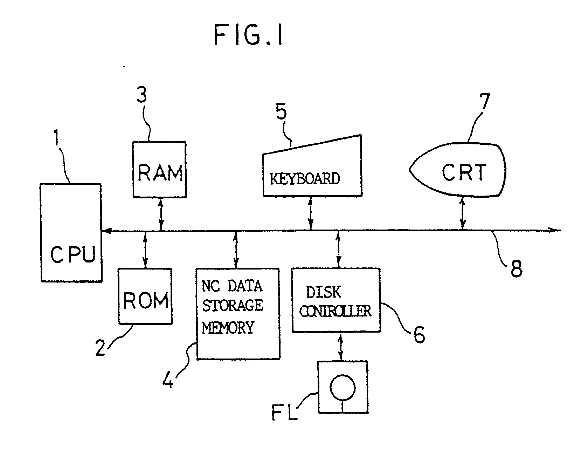

Referring to Fig. 1. an NC automatic programming apparatus for embodying a set data retention method according to one embodiment of the present invention comprises a processor (CPU) 1, read-only memory (ROM) 2, random access memory (RAM) 3, NC data storage memory 4, keyboard 5, disk controller 6, and graphic display (CRT) 7. These elements 2 to 7 are connected to the CPU 1 by means of a bus 8. The disk controller 6 is arranged to be mounted with a floppy disk FL, e.g., a set data retention disk stored with various part programs described in NC automatic programming language, for use as programming data, and a set data file composed of set data associated individually with these part programs, and a system disk stored with various system programs and a set data setting/retention program. The set data include the cutter path drawing range on a CRT screen, drawing scale, type (EIA, ISO, etc.) of the code used for the delivery of NC data to an NC tape, etc.

The programming apparatus, which can enjoy interactive entry of the programming data, is arranged to store the RAM 3 with the set data, the interactively entered data, the system programs and part programs loaded from the floppy disk FL, and the result of arithmetic operation by means of the CPU 1, and to store the memory 4 with the NC data originated in the programming apparatus.

The following is a description of the operation of the programming apparatus of Fig. 1.

At the start of the operation of the programming apparatus, the programming data for the origination or identification of the NC data and set data associated therewith are loaded into the RAM 3. For example, the various part programs, the set data associated individually with these part programs, the various system programs, and the set data setting/retention program are transferred from the floppy disk FL to the RAM 3 to be loaded therein under the control of the CPU 1.

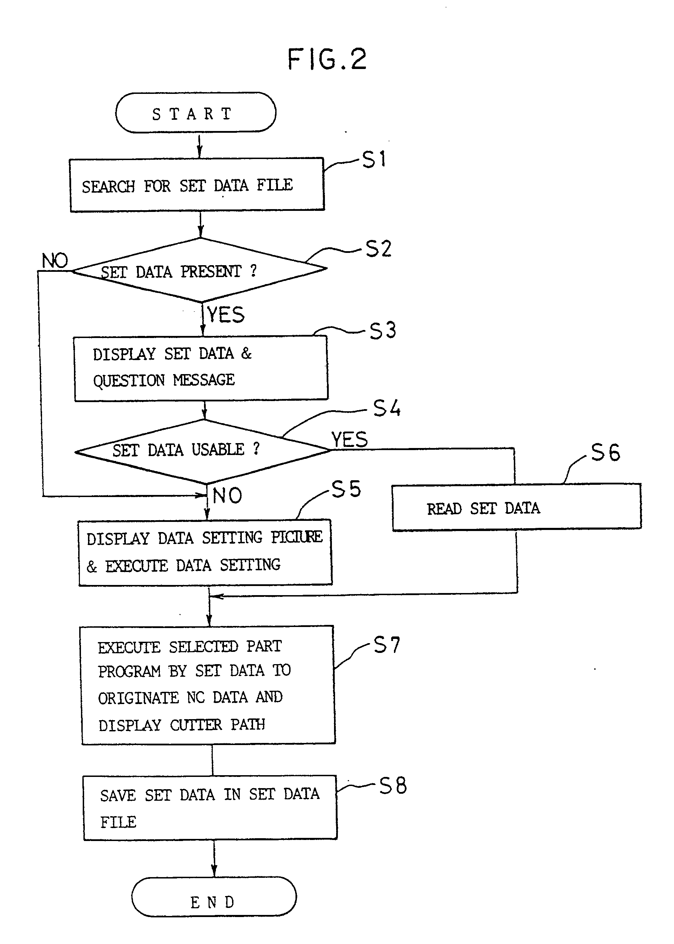

When an operator operates the keyboard 5 to assign the program number of a part program, for example, as the programming data for the origination or identification of the NC data, thereby selecting the part program, and then enters an NC data origination/identification command, the CPU 1 executes a set data setting/retention process of Fig. 2.

First, the CPU 1 searches for the set data file to determine whether or not the set data associated with the part program selected by the operator is contained in the set data file (Steps S1 and S2). If the set data associated with the selected part program is already originated and contained in the set data file, this set data and a message to inquire whether this data should be used are displayed on the screen of the CRT 7 under the control of the CPU 1 (Step S3).

If the operator, in response to this question message, enters a command to the effect that the set data displayed on the CRT screen should be used, by means of the keyboard 5 (Step S4), the CPU 1 reads the set data (Step S6), and executes the part program selected by the operator by using this set data, thereby originating the NC data on the basis of the part program and displaying a cutter path based on the NC data on the CRT screen (Step S7). If the operator performs interactive editing operation as required with reference to the displayed contents, the CPU 1 executes a conventional NC data editing process. The NC data thus originated and edited is loaded into the memory 4. Then, the CPU 1 writes the set data in that column of the set data file which corresponds to the selected part program, and saves the data (Step S8).

If it is concluded in Step S2, on the other hand, that the set data associated with the selected part program is not originated yet and is not contained in the set data file, or if it is concluded in Step S4 that a command is entered to the effect that the set data displayed on the CRT screen should not be used, a set data setting picture for newly originating or reoriginating set data is displayed on the CRT screen under the control of the CPU 1. In response to the operator's set data entry, the CPU 1 executes a data setting process. More specifically, the CPU 1 loads the set data into the set data file in association with the selected part program (Step S5). When the data setting process is finished. the CPU 1 executes the aforesaid NC data origination and cutter path display of Step S7 and the set data saving of Step S8.

When using the data interactively entered in the programming apparatus as the programming data, the operator operates the keyboard 5 to give a command to the effect that this data should be used as the programming data, and to enter the NC data origination/identification command. Thereupon, the set data setting/retention process of Fig. 2 is executed in the aforementioned manner. Thus, if set data is newly set (Step S5), this set data is loaded into the set data file in association with the interactively entered data (Step S8). When this input data is assigned again as the programming data to be used for the NC data origination or identification. the set data associated with the input data is read out from the set data file (Step S6).

## Claims

1. A set data retention method comprising the steps of:

    (a) storing set data in association with programming data for the origination or identification of NC data when said set data is inputted, said set data being required for the execution of said programming data; and

    (b) reading out the set data associated with said programming when said programming data is rerun.

2. A set data retention method according to claim 1, wherein said NC data is identified by displaying a cutter path on a screen in accordance with said programming data.

3. A set data retention method according to claim 1, wherein said programming data is a part program described in NC automatic programming language.

4. A set data retention method according to claim 1, wherein said programming data is data interactively entered in an NC automatic programming apparatus.

# FIG.1

CPU 1

RAM 3

KEYBOARD 5

CRT 7

ROM 2

NC DATA STORAGE MEMORY 4

DISK CONTROLLER 6

FL

8

# FIG.2

```
         ┌─────────────────┐
         │     START       │
         └────────┬────────┘
                  │
         ┌────────▼────────────┐
         │ SEARCH FOR SET      │──── S1
         │ DATA FILE           │
         └────────┬────────────┘
                  │
        NO   ╱────▼────────╲
       ◄─────  SET DATA      ╲──── S2
              ╲  PRESENT ?   ╱
               ╲────┬───────╱
                    │ YES
         ┌──────────▼──────────┐
         │ DISPLAY SET DATA &  │──── S3
         │ QUESTION MESSAGE    │
         └──────────┬──────────┘
                    │
              ╱─────▼──────╲
             ╱ SET DATA      ╲   YES
             ╲ USABLE ?      ╱────────────────────┐
              ╲──────┬──────╱             S6 ─────┤
                 NO  │                ┌───────────▼──────┐
         ┌───────────▼──────┐         │  READ SET DATA   │
         │ DISPLAY DATA     │── S5    └───────────┬──────┘
         │ SETTING PICTURE  │                     │
         │ & EXECUTE DATA   │                     │
         │ SETTING          │                     │
         └───────────┬──────┘                     │
                     │◄───────────────────────────┘
         ┌───────────▼──────┐
         │ EXECUTE SELECTED │──── S7
         │ PART PROGRAM BY  │
         │ SET DATA TO      │
         │ ORIGINATE NC     │
         │ DATA AND DISPLAY │
         │ CUTTER PATH      │
         └───────────┬──────┘
                     │
         ┌───────────▼──────┐
         │ SAVE SET DATA IN │──── S8
         │ SET DATA FILE    │
         └───────────┬──────┘
                     │
         ┌───────────▼──────┐
         │      E N D       │
         └──────────────────┘
```

# INTERNATIONAL SEARCH REPORT

International Application No PCT/JP90/01328

**I. CLASSIFICATION OF SUBJECT MATTER (if several classification symbols apply, indicate all)** 6

According to International Patent Classification (IPC) or to both National Classification and IPC

Int. Cl$^5$  G05B19/403

**II. FIELDS SEARCHED**

| Minimum Documentation Searched 7 | |
|---|---|
| Classification System | Classification Symbols |
| IPC | G05B19/403 |

| Documentation Searched other than Minimum Documentation to the Extent that such Documents are Included in the Fields Searched 8 | |
|---|---|
| Jitsuyo Shinan Koho | 1971 – 1990 |
| Kokai Jitsuyo Shinan Koho | 1971 – 1990 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | JP, A, 62-241008 (Hitachi Seiki K.K.), October 21, 1987 (21. 10. 87), (Family: none) | 1-4 |
| A | JP, A, 62-236651 (Hitachi Seiki K.K.), October 16, 1987 (16. 10. 87), (Family: none) | 1-4 |
| A | JP, A, 63-73402 (Okuma Machinery Works, Ltd.), April 4, 1988 (04. 04. 88), (Family: none) | 1-4 |
| A | JP, A, 63-131205 (Hitachi Seiko K.K.), June 3, 1988 (03. 06. 88), (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 20, 1990 (20. 12. 90) | January 14, 1991 (14. 01. 91) |
| International Searching Authority | Signature of Authorized Officer |
| Japanese Patent Office | |

Form PCT/ISA/210 (second sheet) (January 1985)